# EUROPÄISCHE PATENTSCHRIFT

(11) **EP 0 936 967 B1**
(45) Veröffentlichungstag und Bekanntmachung des Hinweises auf die Patenterteilung: **11.07.2001**
(21) Anmeldenummer: 97948834.3
(22) Anmeldetag: 29.10.1997
(51) Int. Cl.: B29C 45/64

(54) **VORRICHTUNG ZUM VERRIEGELN UND ÖFFNEN EINES SPRITZGUSSWERKZEUGES**
INJECTION MOULDING DIE LOCKING AND OPENING DEVICE
DISPOSITIF POUR VERROUILLER ET OUVRIR UN MOULE POUR INJECTION

(30) Priorität: 07.11.1996 DE 19645860
(43) Veröffentlichungstag der Anmeldung: 25.08.1999
(73) Patentinhaber: OptiMel Schmelzgusstechnik GmbH & Co. KG, 58644 Iserlohn (DE)
(72) Erfinder: KASELOW, Thorsten, D-58675 Hemer (DE); SCHULZ, Christian, D-58802 Balve (DE)
(74) Vertreter: Mathes, Nikolaus, Dr.
(86) Internationale Anmeldenummer: EP9705977
(87) Internationale Veröffentlichungsnummer: WO9819849

(56) Entgegenhaltungen:
- EP-A- 0 286 553
- EP-A- 0 488 261
- US-A- 3 353 221
- US-A- 5 456 588
- "Locking device for molding and die-casting machines" RESEARCH DISCLOSURE., Nr. 250, Februar 1985, HAVANT GB, Seite 126 XP002059366
- PATENT ABSTRACTS OF JAPAN vol. 12, no. 442 (M-766), 21.November 1988 & JP 63 174773 A (JAPAN STEEL WORKS LTD:THE), 19.Juli 1988,
- PATENT ABSTRACTS OF JAPAN vol. 12, no. 260 (M-720), 21.Juli 1988 & JP 63 042828 A (MATSUSHITA ELECTRIC IND CO LTD), 24.Februar 1988,

## Beschreibung

Die Erfindung betritt eine Vorrichtung zum Verriegeln und Öffnen eines Spritzgußwerkzeuges, insbesondere zur Verarbeitung von dünnflüssigem, aufgeschmolzenem Kunststoffmaterial, mit einem das eine Werkzeugteil gegenüber dem korrespondierenden anderen Werkzeugteil in Schließposition haltenden Klemmstift und einem diesem Klemmstift zugeordneten Schieberelement.

Spritzformen gibt es in sehr unterschiedlichen Gestaltungen. Dabei ist es beispielsweise bekannt, auch bei der Verarbeitung dünnflüssigen, vorher aufgeschmolzenen Kunststoffmaterials, beispielsweise das Werkzeugoberteil mit einem Schließzylinder von oben auf das Werkzeugunterteil zu verfahren, um es dann unter Druck in Schließstellung zu halten, wobei Drücke von 6.000 bis 7.500 N aufgewandt werden. Es gibt auch die Möglichkeit, in einer Art Schubladensystem ein Vergußwerkzeug von Hand zusammenzustecken und anschließend in Klemmvorrichtungen einzuschieben, wobei dann diese Klemmvorrichtung die Werkzeughälften zuhält und gegenüber der Einspritzdüse fixiert.

Es ist auch bekannt, Formenhälften auf Gleitelementen zu führen und dies über Kniehebel zu öffnen und zu schließen und in Schließstellung zu halten. Werden Schließzylinder, Kniehebel oder dergleichen benutzt, ist ein vergleichsweise hoher technischer Aufwand notwendig. Auch muß Platz geschaffen werden für die Schließmechanik, so etwa oberhalb eines Arbeitstisches, wenn die obere Formhälfte von einem Zylinder auf die untere Hälfte in die Arbeitsposition gebracht und dort gehalten wird.

Eine Vorrichtung der eingangs genannten Art ist aus der EP-A-0 286 553 bekannt. Zwei korrespondierende Werkzeugteile werden in der Schließposition von einem Klemmstift gehalten, welcher mit dem einen Ende im unteren Werkzeugteil verankert und mit seinem anderen Ende in eine Öffnung des oberen Werkzeugteils einführbar ist. Die Schließposition wird fixiert, indem ein Schieberelement den Kopf des Klemmstiftes in der Öffnung des oberen Werkzeugteils festklemmt. Die axiale Bewegung des Klemmstiftes wird nicht durch das Schieberelement bewirkt. Das Schieberelement dient hier nur zur Fixierung der Lage des Klemmstiftes in der Schließposition des Spritzgußwerkzeuges. Die axiale Bewegung des Klemmstiftes in die Schließposition muß daher durch zusätzliche Elemente vorgenommen werden.

Eine weitere Vorrichtung zum Verriegeln und Öffnen eines Spritzgußwerkzeugs ist aus 'Locking device for molding and die-casting machines' RESEARCH DISCLOSURE, Nr. 250, Februar 1985, HAVANT GB, Seite 126, XP002059366 bekannt. Dieses Dokument zeigt keine Klemmstifte zum Fixieren der Schließposition des Spritzgußwerkzeuges. Hier wird das Spritzgußwerkzeug über Keilplatten und eine Führungsstange verriegelt.

Als Stand der Technik sei außerdem PATENT ABSTRACTS OF JAPAN vol. 12, no. 260 (M-720), 21. Juli 1988 & JP 63 042828 A (MATSUSHITA ELECTRIC IND CO LTD), 24. Februar 1988 genannt. In der Vorrichtung nach diesem Dokument, welche einen Klemmstift und ein zugeordnetes Schieberelement zum Fixieren der Schließposition aufweist, hat das Schieberelement nur eine einzige Funktion, nämlich die Schließposition zu fixieren. Mit dem Schieberelement läßt sich der Klemmstift nicht in die Schließstellung bzw. in die Öffnungsstellung axial bewegen.

Gegenüber der Vorrichtung nach der EP-A-0 286 553 ist es Aufgabe der Erfindung, eine technisch einfache, kostengünstige Mechanik zur Werkzeugverriegelung zu schaffen, die weitestgehend auf Elemente oberhalb der Arbeitstischebene oder vor der Formebene, wenn diese vertikal angeordnet ist, verzichten kann.

Bei einer Vorrichtung der eingangs bezeichneten Art wird diese Aufgabe gemäß der Erfindung dadurch gelöst, daß mehrere Klemmstifte vorgesehen sind, die über je ein zugeordnetes Schieberelement in die Schließposition einerseits und in eine Öffnungsposition andererseits axial bewegbar sind, und daß jedes Schieberelement auf seiner einen Seite eine den Klemmstift in die Schließstellung und auf seiner anderen Seite eine den Klemmstift in die Öffnungsstellung bewegende Rampe aufweist.

Zweckmäfige Weiterbildungen der Erfindung sind Gegenstand der abhängigen Ansprüche.

Durch die Verriegelung der Werkzeughälften zueinander über Klemmstifte einerseits und diese beaufschlagende Schieberelemente andererseits ist eine konstruktiv sehr einfache Gestaltung möglich.

Die Kombination aus Klemmstift einerseits und diesen fixierenden Schieberelement andererseits macht den Verschluß unabhängig davon, welche Einspritzdrücke aufgewandt werden. Mit der erfindungsgemäßen Verriegelung können auch sehr hohe Drücke verkraftet werden.

Durch die genannten Rampen der Schieberelemente ergibt sich nicht nur ein optimales Schließen der Formenhälften, sondern auch ein einfaches Öffnen, da über die Rampe zur Bewegung in Öffnungsstellung eine minimale Hubbewegung des Werkzeuges automatisch erfolgt, was das Entformen des Spritzlinges erheblich vereinfacht.

In Ausgestaltung sieht die Erfindung vor, daß die beiden Schieberelemente zu einem Gabelschieber zusammengefaßt sind, der seinerseits über ein Antriebselement, insbesondere einen Pneumatikzylinder, verschiebbar gelagert ist. Hier können Pneumatikzylinder eingesetzt werden mit vergleichsweise geringem Schließdruck, da die Pneumatikzylinder keinen Schließdruck aufbringen müssen. Dies geschieht über die Gabel bzw. unmittelbar über die Schieberelemente.

Eine besonders vorteilhafte Ausgestaltung der Erfindung besteht darin, daß das eine Werkzeugteil als in einer Arbeitstischebene positioniertes Werkzeugunterteil und das andere Werkzeugteil als Werkzeugoberteil ausgebildet ist, wobei der Gabelschieber und dessen Antrieb unterhalb der Tischebene angeordnet sind.

Diese Gestaltung macht es möglich, die Arbeitsebene praktisch frei von Schließ- oder Betätigungselementen der Formen zu halten, so daß eine große Bewegungsfreiheit gegeben ist, da konventionelle kraftschlüssige Schließvorrichtungen hier entbehrlich sind.

Die Erfindung sieht auch vor, daß die Schieberelemente mit Längsschlitzen ausgerüstet sind, die in einen erweiterten, den Durchtritt eines Kopfelementes an jedem Klemmstift ermöglichenden Bereich übergehen.

Die Erfindung ist nachstehend anhand der Zeichnung beispielsweise näher erläutert. Diese zeigt in
- Fig. 1: eine Seitenansicht teilweise geschnitten mit dem Spritzgußwerkzeug in Schließstellung,
- Fig. 2: in gleicher Darstellung das Spritzgußwerkzeug in Öffnungsstellung vor Entnahme des oberen Werkzeugteiles,

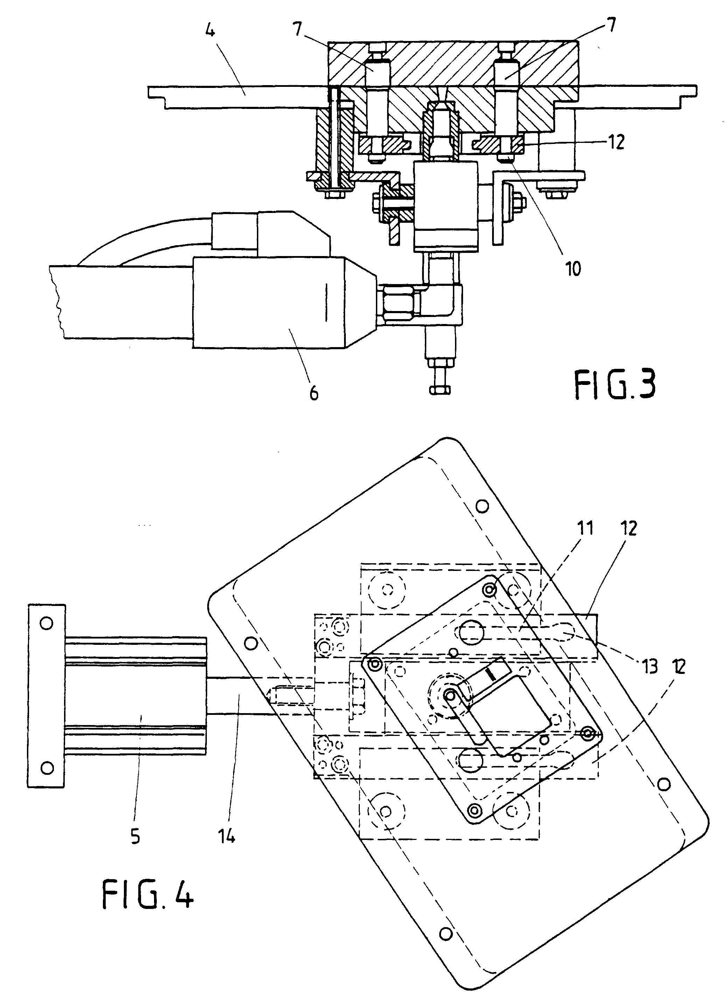

- Fig. 3: einen Querschnitt senkrecht zu den Schnittdarstellungen der Fig. 1 und 2 sowie in

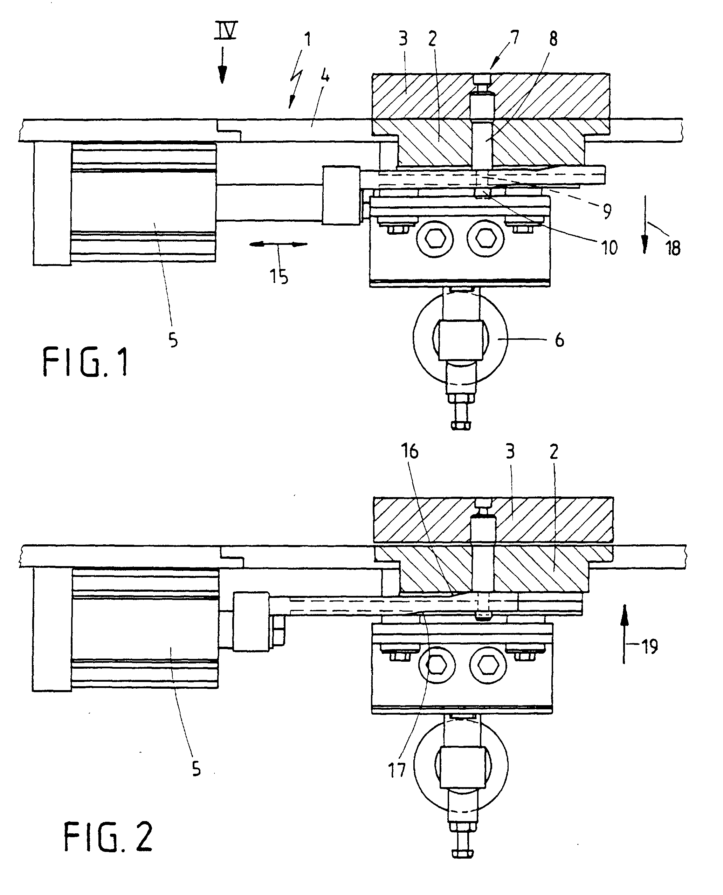

- Fig. 2: eine Aufsicht gemäß Pfeil IV in Fig. 1, teilweise abgebrochen.

Die allgemein mit 1 bezeichnete Vorrichtung wird in den dargestellten Beispielen von einer Werkzeugunterteil 2 und einem Werkzeugoberteil 3 mit der Trennebene auf dem Niveau eines Arbeitstisches 4 gebildet sowie einem Pneumatikzylinder 5 und einer Kunststoffeinspritzung 6 in das Werkzeugunterteil.

Im Werkzeugoberteil 3 sind im dargestellten Beispiel zwei Klemmstifte 7 vorgesehen, die mit einem Schaft 8 das Werkzeugunterteil 2 gleitend durchsetzen, einen Führungshals 9 und einen Kopf 10 aufweisen, wobei der Führungshals 9 in einer Langlochführung 11 eines allgemein mit 12 bezeichneten Schieberelementes geführt ist, wobei das Langloch 11 in eine erweiterte Öffnung 13 übergeht, die den Durchtritt des Kopfes 10 möglich macht.

Zur Beaufschlagung der Klemmstifte 7 ist je ein Schieberelement 12 vorgesehen, die zu einer Gabel 14 zusammengefaßt sind und vom Hydraulikzylinder 5 gemäß Doppelpfeil 15 (Fig. 1) bewegbar sind.

Wie sich insbesondere aus den Fig. 1 und 2 ergibt, weist jedes Schieberelement 12 eine obere Rampe 16 und eine untere Rampe 17 auf, die bewirken, daß einmal über die untere Rampe 17 der Kopf 10 in Fig. 1 gemäß Pfeil 18 nach unten und über die Rampe 16 gemäß Pfeil 19 nach oben verschoben wird. Liegt eine Verschiebung gemäß Pfeil 18 nach unten vor, verriegeln sich die beiden Formenhälften 2 und 3, wird der Klemmstift 7 gemäß Pfeil 19 über die Rampe 16 nach oben angehoben, ergibt sich die in Fig. 2 angedeutete geringfügige Öffnungsstellung, die nur beispielsweise 2 mm betragen kann, wobei gleichzeitig der Spritzling gelockert wird.

Befindet sich der Stößel 14 in der in Fig. 2 dargestellten Endstellung, fluchtet der Kopf 10 mit dem erweiterten Bereich 13 des Langloches 11, so daß die obere Formhälfte 3 problem nach oben, sei es von Hand, sei es automatisch, abgehoben werden kann.

Natürlich ist das beschriebene Ausführungsbeispiel der Erfindung noch in vielfacher Hinsicht abzuändern, ohne den Grundgedanken zu verlassen. So können beispielsweise die beiden Rampen 16 und 17 mit der Langlochführung 11 und den erweiterten Bereichen 13 an Segmenten einer rotierbaren Scheibe angeordnet sein, die unterhalb der Tischebene rotiert wird, u. dgl. mehr.

## Patentansprüche

1. Vorrichtung zum Verriegeln und Öffnen eines Spritzgußwerkzeuges, insbesondere zur Verarbeitung von dünnflüssigem, aufgeschmolzenem Kunststoffmaterial, mit einem das eine Werkzeugteil (2) gegenüber dem korrespondierenden anderen Werkzeugteil (3) in Schließposition haltenden Klemmstift (7) und einem diesem Klemmstift (7) zugeordneten Schieberelement (12),
**dadurch gekennzeichnet**,
daß mehrere Klemmstifte (7) vorgesehen sind, die über je ein zugeordnetes Schieberelement (12) in die Schließposition einerseits und in eine Öffnungsposition andererseits axial bewegbar sind, und daß jedes Schieberelement (12) auf seiner einen Seite eine den Klemmstift (7) in die Schließstellung und auf seiner anderen Seite eine den Klemmstift (7) in die Öffnungsstellung bewegende Rampe (17 bzw. 16) aufweist.

2. Vorrichtung nach Anspruch 1,
**dadurch gekennzeichnet**,
daß die beiden Schieberelemente (12) zu einem Gabelschieber (14) zusammengefaßt sind, der seinerseits über ein Antriebselement, insbesondere einen Pneumatikzylinder (5), verschiebbar gelagert ist.

3. Vorrichtung nach Anspruch 2,
**dadurch gekennzeichnet**,
daß das eine Werkzeugteil als in einer Arbeitstischebene positioniertes Werkzeugunterteil (2) und das andere Werkzeugteil als Werkzeugoberteil (3) ausgebildet ist, wobei der Gabelschieber (14) und dessen Antrieb unterhalb der Tischebene angeordnet sind.

4. Vorrichtung nach einem der vorhergehenden Ansprüche,
**dadurch gekennzeichnet**,
daß die Schieberelemente (12) mit Längsschlitzen (11) ausgerüstet sind, die in einen erweiterten, den Durchtritt eines Kopfelementes (10) an jedem Klemmstift (7) ermöglichenden Bereich (13) übergehen.

## Claims

1. A device for locking and opening an injection mould, more particularly for processing low-viscosity molten plastics, comprising a clamping pin (7) which holds one part (2) of the mould in the closed position relative to the corresponding other part (3) of the mould and a slide element (12) associated with the clamping pin (7), characterized in that there are several clamping pins (7) which are each designed to be moved axially by an associated slide element (12) into the closing position on the one hand and into an opening position on the other hand and in that, on one side, each slide element (12) has a ramp (17) which moves the clamping pin (7) into the closing position and, on its other side, a ramp (16) which moves the clamping pin (7) into the opening position.

2. A device as claimed in claim 1, characterized in that the two slide elements (12) are combined to form a forked slide (14) which is mounted for displacement by a drive element, more particularly a pneumatic cylinder (5).

3. A device as claimed in claim 2, characterized in that one part of the mould is designed as a bottom mould half (2) positioned at bench level while the other part of the mould is designed as a top mould half (3), the forked slide (14) and its drive being arranged below bench level.

4. A device as claimed in any of the preceding claims, characterized in that the slide elements (12) are formed with longitudinal slots (11) which merge into a widened zone (13) allowing a head element (10) to pass each clamping pin (7).

## Revendications

1. Dispositif pour verrouiller et ouvrir un moule d'injection, en particulier pour façonner un matériau plastique, très fluide à l'état fondu, comportant une broche de serrage (7) maintenant une partie de moule (2) en position de fermeture par rapport à l'autre partie correspondante (3) du moule, ainsi qu'un élément coulissant (12) associé à cette broche de serrage (7),
caractérisé en ce qu'
il est prévu plusieurs broches de serrage (7) à chacune desquelles est associé un élément coulissant (12) qui permet de la déplacer axialement pour l'amener en position de fermeture ou en position d'ouverture, chaque élément coulissant (12) présentant d'un côté une rampe (17) qui amène la broche de serrage (7) en position de fermeture, et de l'autre côté une rampe (16) qui amène la broche de serrage (7) en position d'ouverture.

2. Dispositif selon la revendication 1,
caractérisé en ce que
les deux éléments coulissants (12) sont réunis pour former un poussoir à fourche (14) qui lui-même peut coulisser sous l'action d'un élément d'entraînement, en particulier un vérin pneumatique (5).

3. Dispositif selon la revendication 2,
caractérisé en ce qu'
une partie du moule constitue la partie (2) située dans le plan de la table de travail, tandis que l'autre partie constitue la partie supérieure (3) du moule, le poussoir à fourche (14) et son entraînement étant montés en dessous du plan de la table.

4. Dispositif selon une des revendications précédentes,
caractérisé en ce que
les éléments coulissants (12) sont équipés de fentes longitudinales (11) qui se prolongent chacune par une zone élargie (13), à travers laquelle peut passer un élément de tête (10) de chaque broche de serrage (7) correspondante.
